# EUROPEAN PATENT SPECIFICATION

(11) **EP 4 386 804 B1**
(45) Date of publication and mention of the grant of the patent: **02.12.2026**
(21) Application number: 22878250.4
(22) Date of filing: 05.09.2022
(51) Int. Cl.: H01H 37/04, H01H 37/54, H01H 1/50

(54) **BREAKER, SAFETY CIRCUIT, AND SECONDARY BATTERY PACK**
SCHUTZSCHALTER, SICHERHEITSSCHALTUNG UND SEKUNDÄRBATTERIEPACK
DISJONCTEUR, CIRCUIT DE SÉCURITÉ ET BLOC-BATTERIE SECONDAIRE

(30) Priority: 06.10.2021 JP 2021164882
(43) Date of publication of application: 19.06.2024
(60) Divisional application: 25227728.0 / 4 700 812
(73) Proprietor: Bourns KK, Suita-shi, Osaka 564-0034 (JP)
(72) Inventor: YOSHIOKA, Masaki, Suita-shi, Osaka 564-0034 (JP)
(74) Representative: Manitz Finsterwald Patent- und Rechtsanwaltspartnerschaft mbB
(86) International application number: PCT/JP2022/033234
(87) International publication number: WO 2023/058379

(56) References cited:
- WO-A1-2015/029826
- WO-A1-2019/124338
- JP-A- 2011 134 624
- JP-A- 2013 118 155
- JP-A- 2014 235 913
- JP-A- 2017 098 186
- JP-A- 2020 035 515

## Description

### Technical Field

The present invention relates to a minisize breaker to be built into an electrical device, and the like.

### Background Art

Conventionally, breakers are used as protection devices (safety circuits) for secondary batteries, motors, etc. of various electrical devices (see, for example, Patent Document 1).

### Prior art document

JP 2020 035515 A discloses a breaker in accordance with the preamble of independent claim 1. JP 2014 235913 A discloses a further breaker.

### Patent document

Patent document 1: Japanese Patent Application Publication No. 2017-98186

### Summary of the Invention

### Problems to be solved by the Invention

In the breaker of the Patent Document 1, a thermally-actuated element formed in a rectangular shape is used.

The thermally-actuated element is formed by laminating thin plate materials having different coefficients of thermal expansion, and is curved convexly toward a movable piece under the normal condition.

However, when the electrical device is used in environments where it is exposed to extremely low temperatures, the curvature of the thermally-actuated element becomes excessively large.

As a result, there is a possibility that, under such a condition that four corners of the thermally-actuated element contact with (or interfere with) the resin case, a central portion of the thermally-actuated element pushes up the movable piece and the movable contact is separated from the fixed contact.

Further, even if the movable contact is not separated from the fixed contact, the contact pressure of the movable contact to the fixed contact decreases, and the contact resistance between the two contacts increases.

The present invention was made up in view of the above-mentioned circumstances, and
its primary objective is to provide a breaker capable of providing stable conduction even when used at extremely low temperatures.

### Means of solving the Problems

A first invention of the present invention is a breaker comprises:
a fixed piece which has a fixed contact;
a movable piece which has an elastic portion being elastically deformable, and a movable contact in one end portion of the elastic portion, and which presses the movable contact so as to contact with the fixed contact;
a thermally-actuated element which is deformed in response to temperature changes so as to shift the movable piece from a conductive state in which the movable contact contacts with the fixed contact to a cut-off state in which the movable contact is separated from the fixed contact; and
a resin case which has a recessed portion for accommodating the thermally-actuated element,
   wherein
the fixed piece has an embedded portion which is embedded in the resin case in a region which, in a plan view viewed in the thickness direction of the fixed piece, overlaps with the thermally-actuated element, and
the resin case has
   an outer peripheral portion which is formed on the outer perimeter of the recessed portion,
   a first penetrating portion which penetrates the recessed portion so as to exposes the embedded portion to the thermally-actuated element side,
   an island portion which is, in the inside of the first penetrating portion, interposed between the fixed piece and the thermally-actuated element, and
   a connecting portion which connects between the outer peripheral portion and the island portion.

In the breaker according to the present invention, it is preferable that the connecting portion comprises a rib protruding toward the thermally-actuated element.

In the breaker according to the present invention, it is preferable that the fixed piece has a through-hole, and
the outer peripheral portion and the connecting portion are connected by resin filled in the through-hole.

In the breaker according to the present invention, it is preferable that the resin case has a bottom portion which covers a bottom surface of the fixed piece, and a window portion which penetrates the bottom portion and exposes the bottom surface.

In the breaker according to the present invention, it is preferable that the breaker comprises a PTC thermistor, and
the island portion is provided with a second through-hole for attaching the PTC thermistor so that the fixed piece and the thermally-actuated element is electrically connected via the PTC thermistor.

In the breaker according to the present invention, it is preferable that the connecting portion includes
a first connecting portion extending from the island portion to both sides in a longer direction of the movable piece, and
a second connecting portion extending from the island portion to both sides in a shorter direction of the movable piece.

In the breaker according to the present invention, it is preferable that the connecting portion includes
a third connecting portion extending from the island portion in the longer direction of the movable piece toward the opposite side to the fixed contact.

In the breaker according to the present invention, it is preferable that the resin case comprises a protrusion protruding from the island portion to both sides in the shorter direction of the movable piece.

In the breaker according to the present invention, it is preferable that the protrusion terminates before the outer peripheral portion.

In the breaker according to the present invention, it is preferable that the first penetrating portion and the window portion partially overlap in the plan view.

In the breaker according to the present invention, it is preferable that the thermally-actuated element is formed in a rectangular shape in the plan view, and
the first penetrating portion is provided at positions opposed to the four corners of the thermally-actuated element.

The present invention is a safety circuit for an electrical device, comprising the breaker.

The present invention is a secondary battery pack comprising the breaker.

### Effects of the Invention

In the breaker of the present invention, since the first penetrating portion is formed in the resin case, even if the thermally-actuated element becomes excessively deformed at low temperatures, interference between the thermally-actuated element and the resin case is avoided. This prevents the movable piece from being pushed up by the central portion of the thermally-actuated element, and stable conduction can be obtained.

### Brief description of the Drawings

[FIG. 1] A perspective view showing a state before assembly of a breaker manufactured according to the present invention.
[FIG. 2] A cross-sectional view showing the breaker in its normal charging or discharging state.
[FIG. 3] A cross-sectional view showing the breaker in its overcharged state or when abnormal.
[FIG. 4] A perspective view showing a fixed piece and a case main body in FIG. 1.
[FIG. 5] A cross-sectional view showing a breaker exposed to an extremely low temperature environment.
[FIG. 6] A cross-sectional view of the fixed piece and the case main body in FIG. 4.
[FIG. 7] A perspective view showing a modified example of the case main body in FIG. 4 and the fixed piece.
[FIG. 8] A plan view showing the fixed piece and the case main body in FIG. 7.
[FIG. 9] A perspective view showing a modified example of the case main body in FIG. 7 and the fixed piece.
[FIG. 10] A cross-sectional view perpendicular to the longer direction of the case main body and fixed piece in FIG. 9.
[FIG. 11] A plan view showing the configuration of a secondary battery pack equipped with the above-described breaker of the present invention.
[FIG. 12] A circuit diagram of a safety circuit equipped with the above-described breaker of the present invention.

### Mode for carrying out the Invention

A breaker according to an embodiment of the present invention will be described with reference to the drawings.

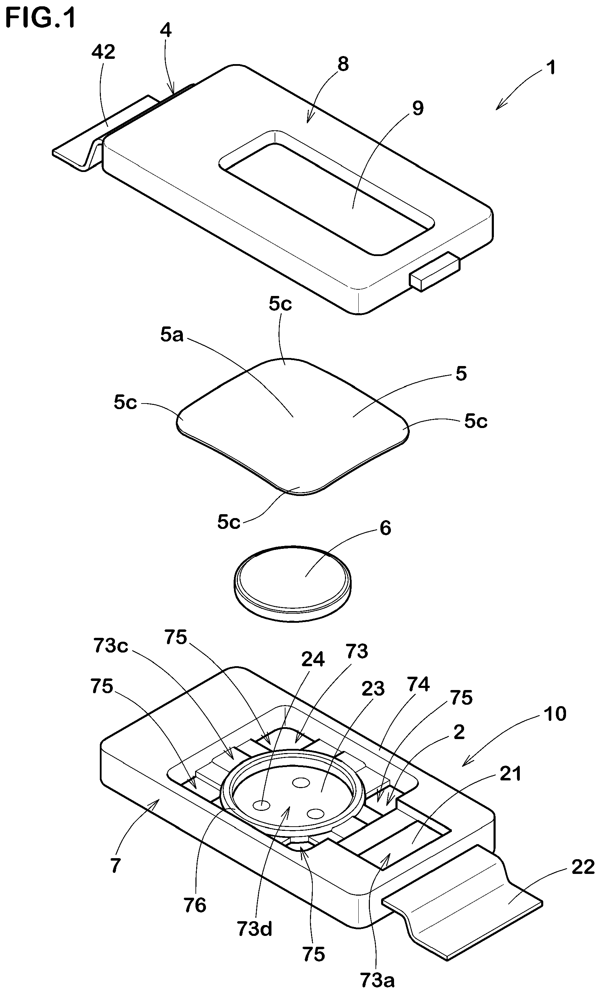

FIGS. 1 to 3 show the configuration of a breaker 1 manufactured according to the present invention.

The breaker 1 is mounted on an electrical device and the like and protects the electrical device from excessive temperature rise or overcurrent.

The breaker 1 comprises a fixed piece 2 having a fixed contact 21, a movable piece 4 having a movable contact 41 in one end portion, a thermally-actuated element 5 which is deformed with temperature changes, a PTC (Positive Temperature Coefficient) thermistor 6 and a resin case 10 housing the fixed piece 2, the movable piece 4, the thermally-actuated element 5 and the PTC thermistor 6,

The resin case 10 is composed of a case main body (first case) 7, a lid member (second case) 8 attached to the upper surface of the case main body 7, and the like.

The fixed piece 2 is formed by pressing a metal plate containing, as its main component, for example, copper or the like (in addition to this, a metal plate of copper-titanium alloy, nickel silver, brass or the like), and is embedded in the case main body 7 by insert molding.

The fixed piece 2 is provided, on one end side thereof, with a terminal 22 electrically connected to an external circuit, and, on the other end side, with a support portion 23 for supporting the PTC thermistor 6.

The terminal 22 protrudes to the outside of the case main body 7.

The PTC thermistor 6 is placed on convex projections (dowels) 24 formed at three positions on the support portion 23 of the fixed piece 2, and is supported by the projections 24.

As the fixed piece 2 is bent in a stepwise manner, the fixed contact 21 and the support portion 23 are arranged at different levels, and a space for storing the PTC thermistor 6 is easily secured.

The fixed contact 21 is formed at a position opposite to the movable contact 41 by cladding, plating, welding, coating, etc. with a highly conductive material such as silver, nickel, nickel-silver alloy, copper-silver alloy, or gold-silver alloy, and is exposed through a part of am opening 73a formed inside the case main body 7.

The terminal 22 projects outward from an edge of the case main body 7.

The support portion 23 is exposed through an opening 73d formed inside the case main body 7.

In this application, unless otherwise noted, the description is made on that, in the fixed piece 2, the surface on which the fixed contact 21 is formed (i.e., the upper surface in FIG. 1) is the first surface, and the opposite surface is the second surface.

The same applies to other parts such as the movable piece 4, the thermally-actuated element 5, the PTC thermistor 6, the resin case 10 and the like.

The movable piece 4 is formed into an arm shape which is symmetrical with respect to a centerline in the longer direction, by pressing a plate-shaped metal material whose main component is copper or the like.

A part of the movable piece 4 (the after-mentioned embedded portion 43) is embedded in the lid member 8 by insert molding.

In one end portion of the movable piece 4 in the longer direction, a movable contact 41 is formed.

The movable contact 41 is made of the same material as the fixed contact 21, for example, and is joined to the one end portion of the movable piece 4 by welding, cladding, crimping, or other methods.

At the other end portion of the movable piece 4, there is formed a terminal 42 electrically connected to an external circuit.

Between the movable contact 41 and the terminal 42, there is formed the embedded portion 43 which is embedded and fixed in the lid member 8.

The embedded portion 43 is arranged on the terminal 42 side.

The movable piece 4 has an elastic portion 44 between the movable contact 41 and the embedded portion 43.

The elastic portion 44 extends from the embedded portion 43 toward the movable contact 41.

The movable piece 4 is cantilever-supported by the lid member 8 at the embedded portion 43 on a base end side of the elastic portion 44. And in this state, as result of the elastic portion 44 being elastically deformed toward the first surface, the movable contact 41 formed in the tip end portion of the elastic portion 44 is pressed toward the fixed contact 21 and comes into contact therewith, and thereby the fixed piece 2 and the movable piece 4 becomes conductive.

It is preferable that the movable piece 4 is curved or bent at the elastic portion 44 by press working.

The degree of curvature or bending is not particularly limited as long as the thermally-actuated element 5 can be accommodated, and may be arbitrarily set in consideration of the elastic force at the operating temperature and reset temperature, the pressing force of the contact, etc.

Further, on the second surface of the elastic portion 44, there are formed a pair of protrusions (contact parts) 44a, 44b so as to face the thermally-actuated element 5.

The projections 44a, 44b are in contact with the thermally-actuated element 5, and the deformation of the thermally-actuated element 5 is transmitted to the elastic portion 44 via the projections 44a, 44b (see FIGS. 1, 2 and 3).

The thermally-actuated element 5 is disposed between the movable piece 4 and the PTC thermistor 6.

That is, the thermally-actuated element 5 is placed on the first surface of the PTC thermistor 6, which will be described later.

The thermally-actuated element 5 shifts the state of the movable piece 4 from a conductive state in which the movable contact 41 contacts with the fixed contact 21
to a disconnected state in which the movable contact 41 is separated from the fixed contact 21.

The thermally-actuated element 5 is formed into a plate shape by laminating thin plate materials having different coefficients of thermal expansion, and has an initial shape whose cross section is curved into an arc.

The curved shape of the thermally-actuated element 5 is reversely warped with a snap motion when the reverse-operation temperature is reached due to overheating, and is restored when the temperature drops below the normally-reset temperature due to cooling.

The initial shape of the thermally-actuated element 5 can be formed by press working.

The material and shape of the thermally-actuated element 5 are not particularly limited as long as the thermally-actuated element 5 pushes up the elastic portion 44 of the movable piece 4 due to the reversely-warping deformation at the desired temperature, and is returned to its original state by the elastic force of the elastic portion 44. However, from the viewpoint of productivity and efficiency of reversely-warping deformation, a rectangular shape is preferred.

As to the materials for the thermally-actuated element 5, two types of materials having different thermal expansion coefficients made of various alloys, e.g. nickel silver, brass, stainless steel and the like are used in combination as a laminated material depending on the required conditions.

For example, as a material for the thermally-actuated element 5 that can provide stable reverse-operation temperature and normally-reset temperature, preferred is a combination of a copper-nickel-manganese alloy on the high expansion side and an iron-nickel alloy on the low expansion side.

Further, a material which is more desirable from the viewpoint of chemical stability, includes a combination of an iron-nickel-chromium alloy on the high expansion side and an iron-nickel alloy on the low expansion side. Furthermore, a material which is more desirable from the viewpoint of chemical stability and processability, includes a combination of an iron-nickel-chromium alloy on the high-expansion side and an iron-nickel-cobalt alloy on the low-expansion side.

When the movable piece 4 is in the cut-off state, the PTC thermistor 6 makes it conductive between the fixed piece 2 and the movable piece 4 via the thermally-actuated element 5.

The PTC thermistor 6 is disposed between the fixed piece 2 and the thermally-actuated element 5. That is, the support portion 23 of the fixed piece 2 is located directly below the thermally-actuated element 5 with the PTC thermistor 6 in between.

When the current flow between the fixed piece 2 and the movable piece 4 is cut off due to the reversely-warping deformation of the thermally-actuated element 5, the current flowing through the PTC thermistor 6 is increased.

As long as the PTC thermistor 6 is a positive characteristic thermistor whose resistance increases as the temperature rises and limits its current, the type can be selected depending on the operating current, operating voltage, operating temperature, reset temperature, etc. And the material and shape are not particularly limited as long as these characteristics are not impaired.

In this embodiment, a ceramic sintered body containing barium titanate, strontium titanate, or calcium titanate is used.

In addition to the ceramic sintered body, a so-called polymer PTC, which is a polymer containing conductive particles such as carbon, may be used.

The case main body 7 and lid member 8 constituting the resin case 10, are molded from thermoplastic resin such as flame-retardant polyamide, polyphenylene sulfide (PPS) with excellent heat resistance, liquid crystal polymer (LCP), and polybutylene terephthalate (PBT).

As long as properties equivalent to or better than those of the resins described above can be obtained, materials other than resins may be used.

On the first surface side of the case main body 7, there is formed a recessed portion 73 which is an internal space for accommodating the movable piece 4, the thermally-actuated element 5, the PTC thermistor 6 and the like.

The recessed portion 73 has
an opening 73a for the reception of the movable piece 4,
an opening 73c for the reception of the movable piece 4 and the thermally-actuated element 5,
an opening 73d for the reception of the PTC thermistor 6, and the like.

The edges of the movable piece 4 and the thermally-actuated element 5 mounted into the case main body 7 are brought into contact with frames forming the recessed portion 73 and guided when the thermally-actuated element 5 makes reversely-warping deformation.

That is, the recessed portion 73 accommodates the movable piece 4 and the thermally-actuated element 5 so that they can deform.

The lid member 8 is configured to cover the recessed portion 73.

The lid member 8 may be configured to cover at least a part of the recessed portion 73.

In the lid member 8, a cover piece 9 which is made of a metal plate containing copper or the like as a main component or made of stainless steel or the like, is embedded by insert molding.

The cover piece 9 is embedded in the lid member 8 in a state being in contact with the first surface of the movable piece 4.

The cover piece 9 limits the movement of the movable piece 4, and increases the rigidity and strength of the lid member 8 and consequently the resin case 10 as a housing, contributing to miniaturization of the breaker 1.

The case main body 7 and the lid member 8 are formed by injection molding using the above-mentioned resin material.

As already described, the fixed piece 2 is inserted in the case main body 7, and the movable piece 4 and the cover piece 9 are inserted in the lid member 8.

As shown in FIG. 1, the lid member 8 is attached to the case main body 7 so as to close the openings 73a, 73b, 73c, etc. of the case main body 7 housing the fixed piece 2, the movable piece 4, the thermally-actuated element 5, the PTC thermistor 6, etc.

The case main body 7 and the lid member 8 are joined by, for example, ultrasonic welding. Thereby, the resin case 10 is formed.

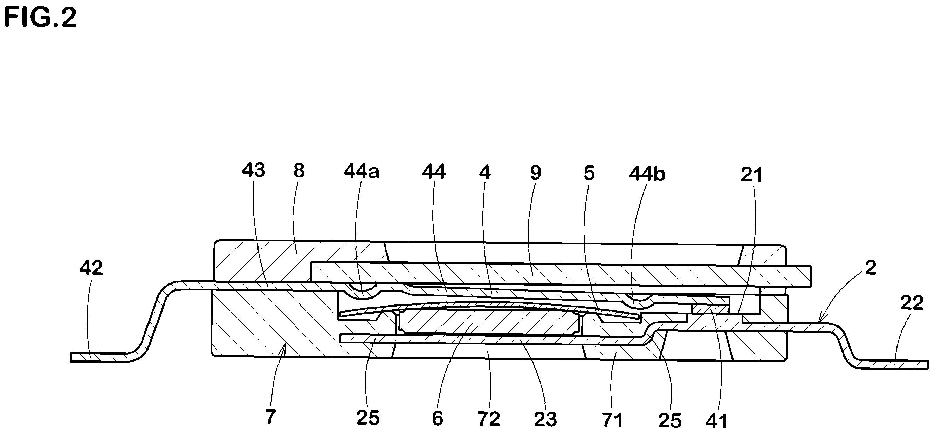

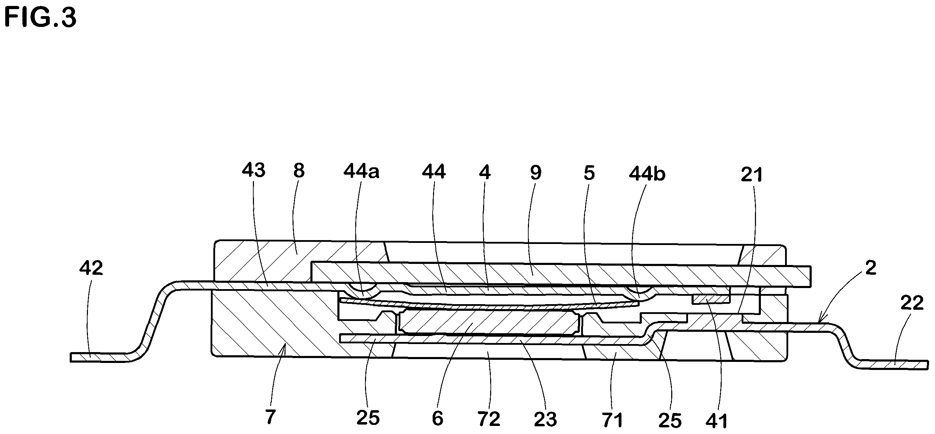

FIGS. 2 and 3 show the typical operations of the breaker 1.

FIG. 2 shows the operation of the breaker 1 in the normal charging or discharging state.

In the normal charging or discharging state, the thermally-actuated element 5 maintains its initial shape before being reversely warped.

When the movable contact 41 is pressed toward the fixed contact 21 by the elastic portion 44, the movable contact 41 and the fixed contact 21 come into contact with each other, and the fixed piece 2 and the movable piece 4 of the breaker 1 are placed in a state where they are electrically connected via the elastic portion 44 of the movable piece 4.

The elastic portion 44 of the movable piece 4 may be in contact with the thermally-actuated element 5.

In this case, the movable piece 4, the thermally-actuated element 5, the PTC thermistor 6 and the fixed piece 2 are electrically connected as a circuit.

But, as the resistance of the PTC thermistor 6 is overwhelmingly larger than the resistance of the movable piece 4, the current flowing through the PTC thermistor 6 is negligibly small in substance when compared with the amount flowing through the fixed contact 21 and the movable contact 41.

FIG. 3 shows the operation of the breaker 1 in an overcharged state or in an abnormal state.

The thermally-actuated element 5, which has a structure in which thin plate materials having different coefficients of thermal expansion are laminated, deforms as the temperature rises so that the initial curved shape shown in FIG. 2 is counteracted.

Then, the thermally-actuated element 5 which has reached the operating temperature snap-deformed into a reversely warped shape as shown in FIG. 3. Thereby, the thermally-actuated element 5 comes into contact with the elastic portion 44 of the movable piece 4, and the elastic portion 44 is pushed up by the thermally-actuated element 5, and as a result, the fixed contact 21 and the movable contact 41 are separated from each other.

At this time, the current flowing between the fixed contact 21 and the movable contact 41 is cut off. On the other hand, the thermally-actuated element 5 comes into contact with the movable piece 4, and a slight leakage current flows through the thermally-actuated element 5 and the PTC thermistor 6.

That is, the PTC thermistor 6 causes the fixed piece 2 and the movable piece 4 to be electrically connected via the thermally-actuated element 5 which caused the movable piece 4 to shift into the cut-off state.

As long as such leakage current flows, the PTC thermistor 6 continues to generate heat, and maintains the thermally-actuated element 5 in a reversely warped state to dramatically increases the resistance value, therefore, the current does not flow between the fixed contact 21 and the movable contact 41, and only the slight leakage current described above exists (constitutes a self-holding circuit).

This leakage current can be used for other functions of the safety device.

When the overcharged state is canceled or the abnormal state is eliminated, the heat generated by the PTC thermistor 6 stops, and the thermally-actuated element 5 returns to the normally-reset temperature and restores its original initial shape.

Then, the movable contact 41 and the fixed contact 21 come into contact with each other again due to the elastic force of the elastic portion 44 of the movable piece 4, and the circuit is released from the disconnected state and returns to the conductive state shown in FIG. 2.

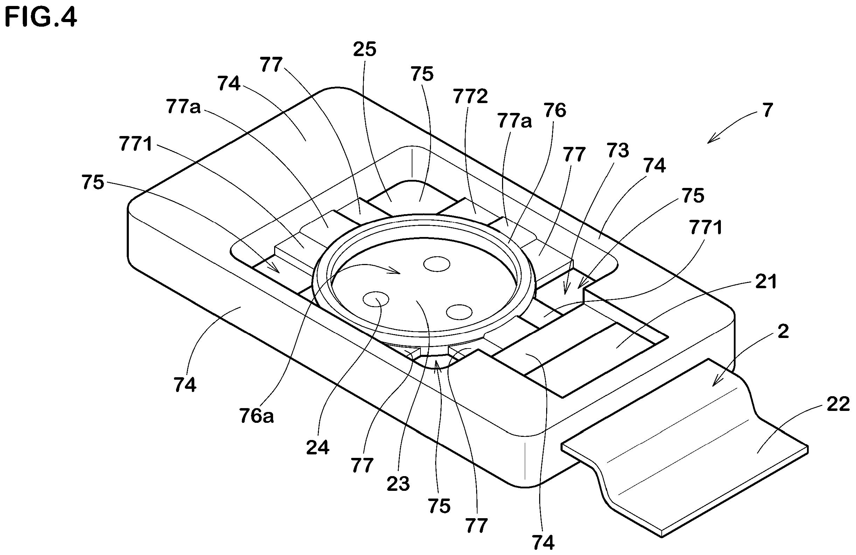

FIG. 4 shows the case main body 7 in which the fixed piece 2 is embedded.

The fixed piece 2 has an embedded portion 25 which is embedded in the case main body 7 in the region overlapping with the thermally-actuated element 5 in a plan view viewed in the thickness direction of the fixed piece 2 (see FIGS. 1 to 3).

The embedded portion 25 in the present embodiment is arranged around the outer circumference of the support portion 23. Thereby, it possible to firmly support the PTC thermistor 6 via the support portion 23.

The case main body 7 has an outer peripheral portion 74, a first penetrating portion 75, an island portion 76, and a connecting portion 77.

The outer peripheral portion 74 is formed around the outer perimeter of the recessed portion 73. An end surface (first surface) of the outer peripheral portion 74 is welded to the lid member 8.

The first penetrating portion 75 penetrates the bottom of the recessed portion 73. Thereby, the first surface of the embedded portion 25 of the fixed piece 2 is exposed to the thermally-actuated element 5 side (recessed portion 73).

The island portion 76 is arranged inside the first penetrating portion 75.

The island portion 76 is interposed between the fixed piece 2 and the thermally-actuated element 5.

The connecting portion 77 connects between the outer peripheral portion 74 and the island portion 76. That is, the connecting portion 77 bridges between the outer peripheral portion 74 and the island portion 76 which are separated from each other by the first penetrating portion 75 .

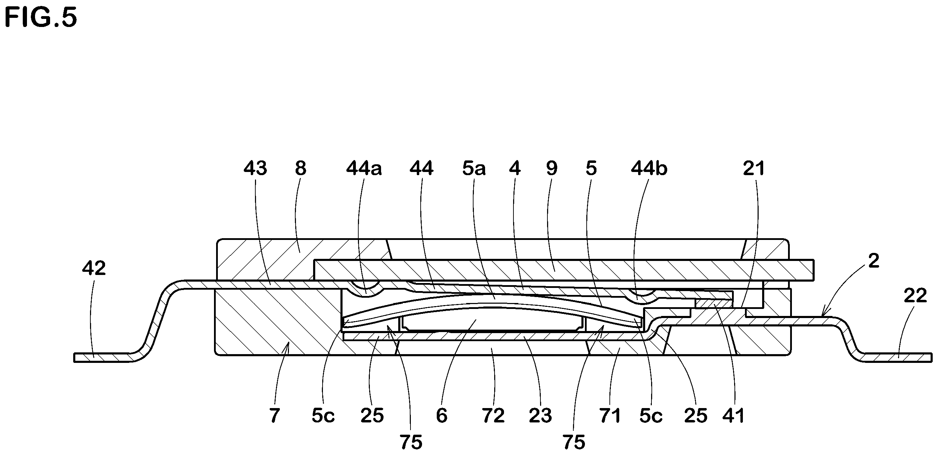

FIG. 5 shows a cross section of the breaker 1 exposed to an extremely low temperature environment (for example, in an atmosphere less than -15 degrees C.).

In the figure, for convenience of explanation, only the thermally-actuated element 5 and the PTC thermistor 6 are depicted in their entirety.

As shown in FIG. 2, in the breaker 1 in normal usage environments (for example, in an atmosphere of 10 degrees C to 80 degrees C without overcurrent), the thermally-actuated element 5 is curved in a convex manner toward the movable piece 4.

When the thermally-actuated element 5 is decreased in temperature from this state, the deformation (i.e. curvature) of the thermally-actuated element 5 becomes excessively large, and the protrusion of the central portion 5a of the thermally-actuated element 5 becomes increased.

Note that the temperatures of the extremely low temperature environment and the normal usage environment are not limited to the above ranges.

In the breaker 1 according to the present invention, since the first penetrating portion 75 is formed in the case main body 7 of the resin case 10, a clearance on the second surface side of the thermally-actuated element 5 is easily secured.

Therefore, even if the thermally-actuated element 5 deforms excessively at low temperatures, interference between the thermally-actuated element 5 and the case main body 7 can be easily avoided.

Thereby, the movable piece 4 is prevented from being pushed up by the central portion 5a of the thermally-actuated element 5, and the movable contact 41 is prevented from separating from the fixed contact 21.

Further, the contact pressure of the movable contact 41 against the fixed contact 21 is suppressed from decreasing, and the contact resistance between the two contacts is maintained low. Thereby, stable conduction can be obtained between the terminal 22 of the fixed piece 2 and the terminal 42 of the movable piece 4.

Furthermore, since the outer peripheral portion 74 and the island portion 76 separated by the first penetrating portion 75 are connected by the connecting portion 77, the case main body 7 becomes strong, and the contact state between the fixed contact 21 and the movable contact 41 is stabilized. Therefore, even more stable conduction can be obtained between the terminal 22 of the fixed piece 2 and the terminal 42 of the movable piece 4.

It is preferable that the connecting portion 77 comprises a rib 77a protruding toward the thermally-actuated element 5.

The rib 77a makes the connecting portion 77 and consequently the case main body 7 even more strong.

Moreover, during molding the case main body 7, the fluidity of the resin material at the connecting portion 77 is increased, and the productivity is improved.

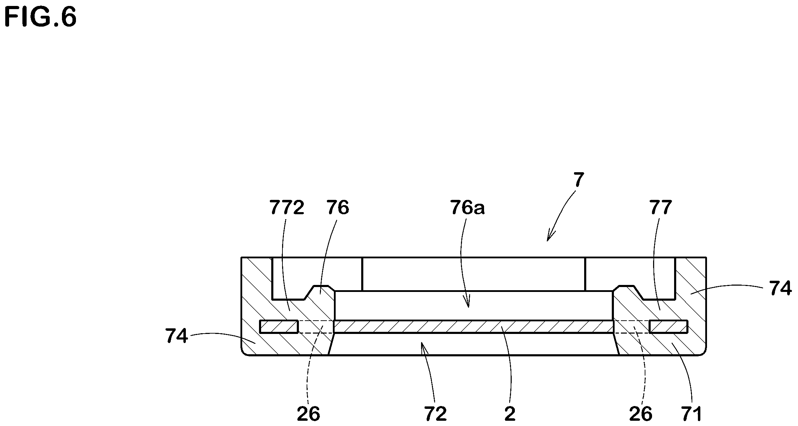

FIG. 6 shows a cross section perpendicular to the longer direction of the case main body 7 and the fixed piece 2.

In this figure, for convenience, the thermally-actuated element 5 and the PTC thermistor 6 are depicted without being cut in the cross section.

The fixed piece 2 has a through-hole 26.

The through-hole 26 is formed in a region overlapping with the connecting portion 77 in a plan view viewed in the thickness direction of the fixed piece 2. The through-hole 26 is filled with the resin constituting the case main body 7. The resin filled in the through-hole 26 connects the outer peripheral portion 74 of the fixed piece 2 on the second surface side to the connecting portion 77 of the fixed piece 2 on the first surface side. Thereby, the case main body 7 becomes even more strong.

Further, when molding the case main body 7, the flow of the resin material from the outer peripheral portion 74 to the connecting portion 77 via the through-hole 26 is increased, and the productivity is improved.

The through-hole 26 may be formed in the shape of a slit extending along the longer direction of the case main body 7 and the fixed piece 2.

With such through-hole 26, it is possible to increase the strength and rigidity of the case main body 7 without increasing the width dimension in the shorter direction perpendicular to the longer direction.

The case main body 7 has a bottom portion 71 covering the bottom surface (second surface) 2a of the fixed piece 2, and a window portion 72 formed in the bottom portion 71.

The window portion 72 penetrates the bottom portion 71 and exposes the bottom surface 2a of the fixed piece 2 to the outside of the case main body 7.

In the present breaker 1, as shown in FIG. 4, a second penetrating portion 76a is formed in the island portion 76.

The second penetrating portion 76a penetrates the island portion 76.

The second penetrating portion 76a is formed in a shape corresponding to the PTC thermistor 6.

The PTC thermistor 6 is housed in the second penetrating portion 76a. Thereby, the fixed piece 2 and the thermally-actuated element 5 can be electrically connected via the PTC thermistor 6.

It is preferable that the connecting portion 77 includes
first connecting portions 771 extending from the island portion 76 to both sides in the longer direction of the movable piece 4, and
second connecting portions 772 extending from the island portion 76 to both sides in the shorter direction of the movable piece 4.

The first connecting portions 771 and the second connecting portions 772 intersect at the island portion 76 in a "+" shape.

The first connecting portions 771 and the second connecting portions 772 provide a plurality of the connecting portions 77 each connecting between the outer peripheral portion 74 and the island portion 76, making the case main body 7 even more strong.

In addition, even if some external force is applied to the outer peripheral portion 74, the island portion 76 in which the second penetrating portion 76a is formed will flexibly deform, therefore, stress concentration on the connecting portion 77 (particularly the junction with the outer peripheral portion 74) is avoided, and damage of the case main body 7 is suppressed.

It is preferable that the first penetrating portion 75 and the window portion 72 partially overlap with each other in the plan view of the fixed piece 2. Thereby, when molding the case main body 7, the fixed piece 2 can be accurately positioned by being sandwiched between the molds from the first penetrating portion 75 side and the window portion 72 side.

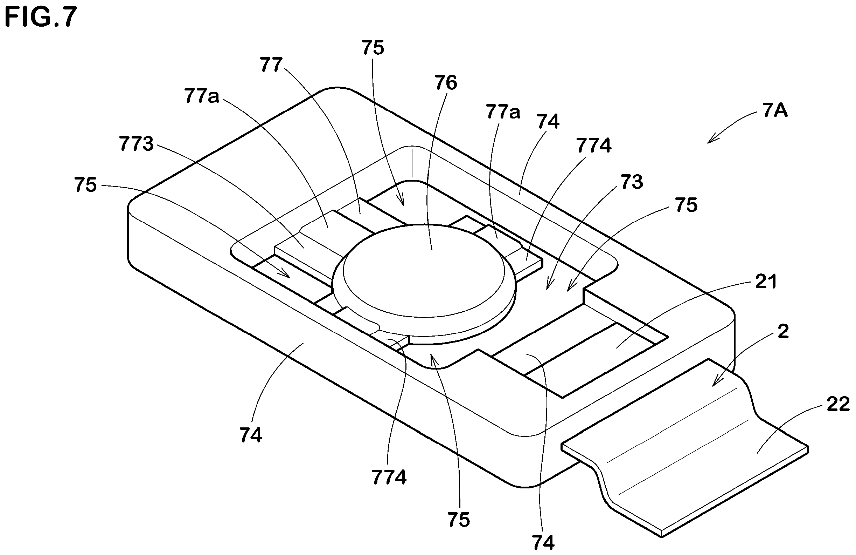

FIG. 7 is a perspective view showing a case main body 7A which is a modification of the case main body 7 and the fixed piece 2.

As to portions of the case main body 7A not explained below, the configuration of the case main body 7 described above may be adopted.

In the case main body 7A, the second penetrating portion 76a for accommodating the PTC thermistor 6 in the island portion 76, is eliminated. Therefore, in the breaker 1 to which the case main body 7A is applied, the PTC thermistor 6 is omitted.

Thereby, the configuration of the breaker 1 is simplified to reduce costs.

In the case main body 7A, the connecting portion 77 includes a third connecting portion 773.

The third connecting portion 773 extends in the longer direction of the movable piece 4 from the island portion 76 toward the side opposite to the fixed contact 21.

Since the outer peripheral portion 74 and the island portion 76 are connected by the third connecting portion 773, the case main body 7 becomes strong, and the contact state between the fixed contact 21 and the movable contact 41 is stabilized.

Therefore, even more stable conduction can be obtained between the terminal 22 of the fixed piece 2 and the terminal 42 of the movable piece 4.

The case main body 7A includes protruding portions 774 protruding from the island portion 76.

The protruding portions 774 protrude toward both sides in the shorter direction of the movable piece 4.

It is preferable that the protruding portions 774 terminate before the outer peripheral portion 74.

Due to such protruding portions 774, even if some external force is applied to the outer peripheral portion 74, the stress is not transmitted to the protruding portions 774 and the island portion 76, therefore, damage to the case main body 7 is suppressed.

It is preferable that the fixed piece 2 combined with the case main body 7A is also provided with a through-hole 26, similar to the fixed piece 2 shown in FIG. 6.

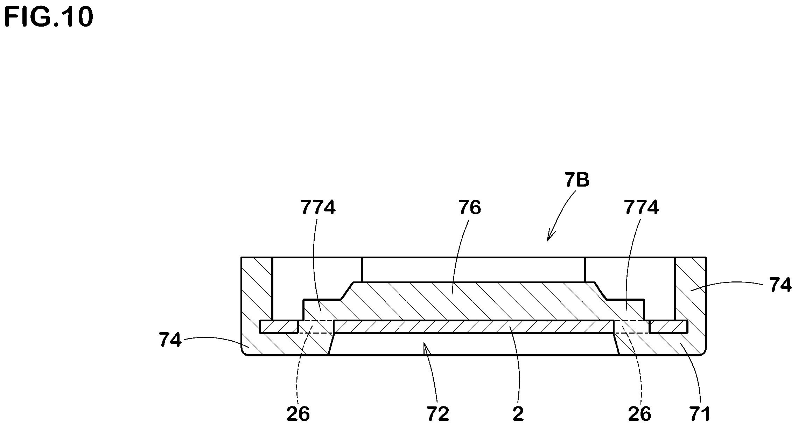

In this case, the through-hole 26 is formed in a region which overlaps with the protruding portions 774 in a plan view viewed in the thickness direction of the fixed piece 2 (see FIG. 10).

The through-hole 26 is filled with the resin constituting the case main body 7A. The resin filled in the through-hole 26 connects the outer peripheral portion 74 of the fixed piece 2 on the second surface side to the protruding portions 774 of the fixed piece 2 on the first surface side. Thereby, the case main body 7A becomes even more strong.

Further, when molding the case main body 7A, the flow of the resin material from the outer peripheral portion 74 to the protruding portions 774 via the through-hole 26 is improved, and the productivity is improved.

It is preferable that the protruding portion 774 comprises a rib 77a protruding toward the thermally-actuated element 5.

Due to the rib 77a, the protruding portion 774 and consequently the case main body 7A become more strong.

Moreover, the fluidity of the resin material in the protruding portions 774 is improved during molding of the case main body 7A, and productivity is improved.

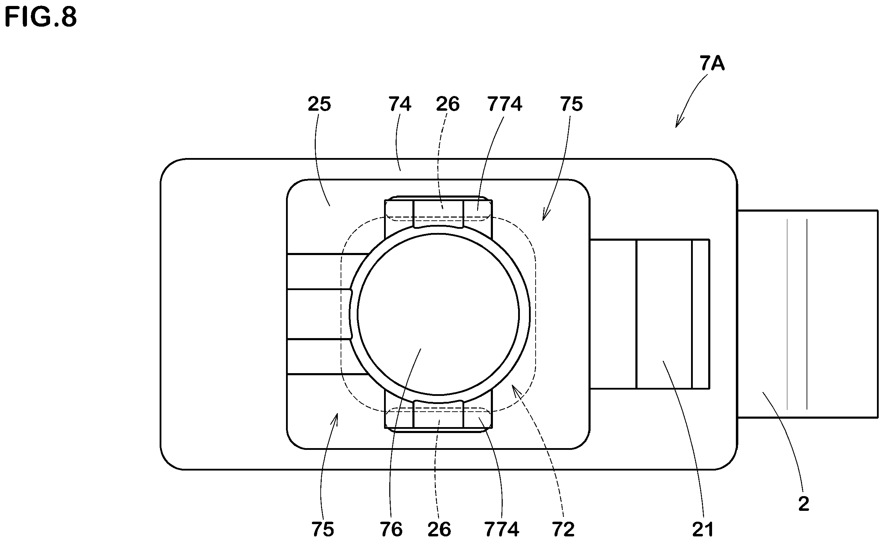

FIG. 8 is the plan view showing the case main body 7A and the fixed piece 2.

It is preferable that the first penetrating portion 75 is provided at locations facing the four corners 5c of the thermally-actuated element 5 which is formed in a rectangular shape as shown in FIGS. 1, 4, 5, 7 and 8.

Thereby, the contact between the thermally-actuated element 5 and the case main body 7, 7A in extremely low temperature environments, can be more easily avoided (see FIG. 5), and stable conduction can be obtained between the terminals 22 of the fixed piece 2 and the terminals 42 of the movable piece 4.

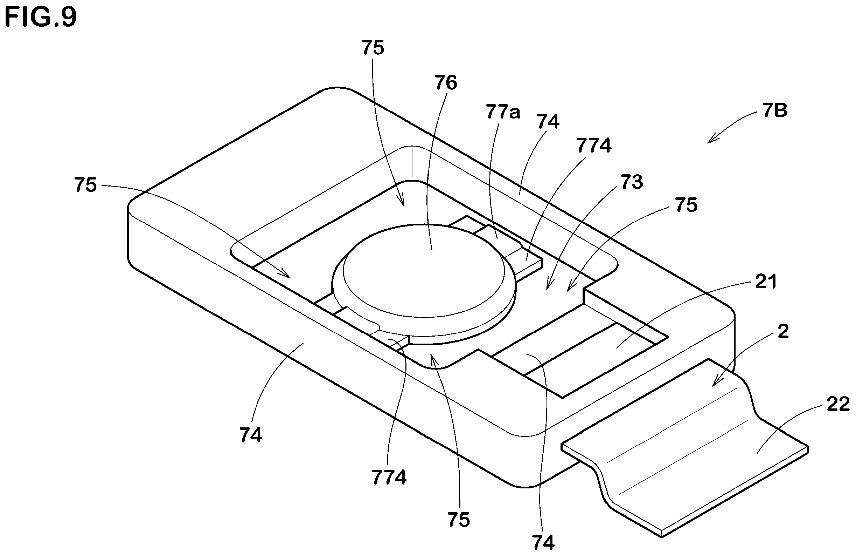

FIG. 9 is a perspective view showing a case main body 7B which is a modification of the case main body 7A, and the fixed piece 2.

FIG. 10 shows a cross section perpendicular to the longer direction of the case main body 7B and the fixed piece 2.

As to portions of the case main body 7B not explained below, the configuration of the case main body 7, 7A described above may be adopted.

In the case main body 7B, the connecting portion 77 connecting between the outer peripheral portion 74 and the island portion 76 is eliminated.

That is, the case main body 7B has the outer peripheral portion 74, the first penetrating portion 75, the island portion 76, the bottom portion 71, and the window portion 72.

As shown in FIG. 10, the fixed piece 2 is provided with the through-hole 26. The through-hole 26 is filled with the resin constituting the case main body 7B. The resin filled in the through-hole 26 connects the outer peripheral portion 74 of the fixed piece 2 on the second surface side to the protruding portions 774 of the fixed piece 2 on the first surface side. Thereby, the case main body 7B becomes even more strong.

Further, when molding the case main body 7B, the flow of the resin material from the outer peripheral portion 74 to the protruding portions 774 via the through-hole 26 is improved, and productivity is improved.

In the case main body 7B, it may be possible to further eliminate the protruding portions 774 protruding from the island portion 76.

In this case, it is configured such that the resin filled in the through-hole 26 connects the outer peripheral portion 74 of the fixed piece 2 on the second surface side to the island portion 76 of the fixed piece 2 on the first surface side.

Even in the case main body 7B, it is preferable that the first penetrating portion 75 is provided at locations facing the four corners 5c of the thermally-actuated element 5 which is formed in a rectangular shape.

Thereby, similarly to the case main body 7, 7A, the contact between the thermally-actuated element 5 and the case main body 7B in extremely low temperature environments, can be more easily avoided, and stable conduction can be obtained between the terminals 22 of the fixed piece 2 and the terminals 42 of the movable piece 4.

While the breaker 1 according to the present invention has been described in detail above, the present invention can be embodied in various forms without being limited to the above-described specific embodiments.

In the breaker 1 of the present embodiment, the movable piece 4 may be fixed between the case main body 7 and the lid member 8, for example, as shown in WO2011/105175.

Further, the movable piece 4 may be fixed to a terminal piece embedded in the case main body 7 by welding, for example, as shown in Japanese Patent Application Publication No. 2020-035515.

That is, the breaker 1 according to the present invention is a breaker 1 which has at least
a fixed piece 2 having a fixed contact 21;
a movable piece 4 which has an elastic portion 44 being elastically deformable, and a movable contact 41 in one end portion of the elastic portion 44, and which presses the movable contact 41 so as to contact with the fixed contact 21;
a thermally-actuated element 5 which is deformed in response to temperature changes so as to shift the movable piece 4 from a conductive state in which the movable contact 41 contacts with the fixed contact 21 to a cut-off state in which the movable contact 41 is separated from the fixed contact 21; and
a resin case 10 having a recessed portion 73 for accommodating the thermally-actuated element 5,
wherein it is suffice to satisfy the following:
the fixed piece 2 has an embedded portion 25 embedded in the resin case 10 in a region which overlaps with the thermally-actuated element 5 in a plan view viewed in the thickness direction of the fixed piece 21; and
the resin case 10 has an outer peripheral portion 74 formed on the outer perimeter of the recessed portion 73, a first penetrating portion 75 penetrating the recessed portion 73 to expose the embedded portion 25 toward the thermally-actuated element 5, an island portion 76 interposed between the fixed piece 2 and the thermally-actuated element 5 in the inside of the first penetrating portion, and a connecting portion 77 connecting between the outer peripheral portion 74 and the island portion 76.

Further, the breaker 1 according to the present invention is a breaker 1 which has at least
a fixed piece 2 having a fixed contact 21,
a movable piece 4 which has an elastic portion 44 being elastically deformable, and a movable contact 41 in one end portion of the elastic portion 44, and which presses the movable contact 41 so as to contact with the fixed contact 21;
a thermally-actuated element 5 which is deformed in response to temperature changes so as to shift the movable piece 4 from a conductive state in which the movable contact 41 contacts with the fixed contact 21 to a cut-off state in which the movable contact 41 is separated from the fixed contact 21; and
a resin case 10 having a recessed portion 73 for accommodating the thermally-actuated element 5,
wherein it is suffice to satisfy the following:
the fixed piece 2 has an embedded portion 25 embedded in the resin case 10 in a region which overlaps with the thermally-actuated element 5 in a plan view viewed in the thickness direction of the fixed piece 2; and
the resin case 10 has an outer peripheral portion 74 formed on the outer perimeter of the recessed portion 73, a first penetrating portion 75 penetrating the recessed portion 73 to expose the embedded portion 25 toward the thermally-actuated element 5, an island portion 76 interposed between the fixed piece 2 and the thermally-actuated element 5 in the inside of the first penetrating portion, a bottom portion 71 covering the bottom surface of the fixed piece 2, and
a window portion 72 penetrating the bottom portion 71 to expose a part of the bottom surface of the fixed piece 2.

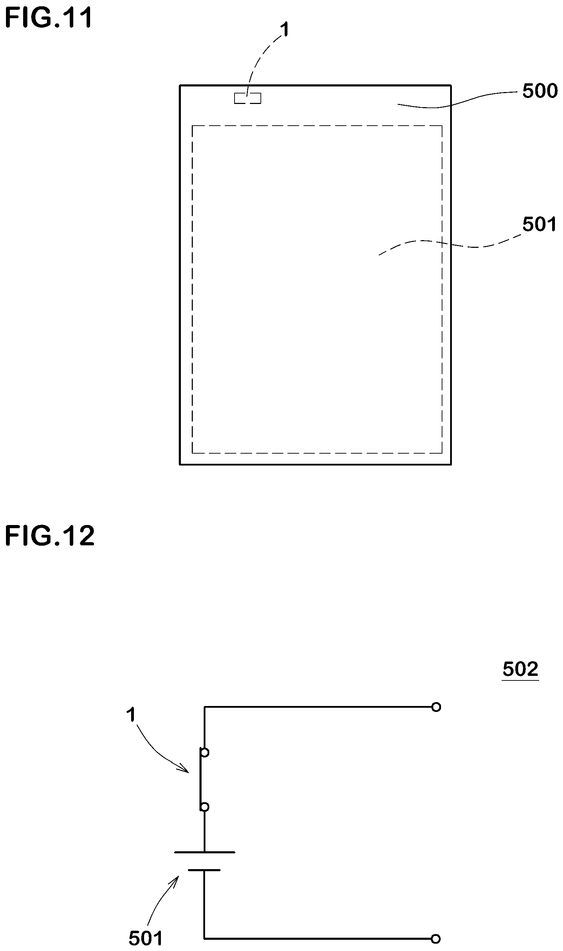

Meanwhile, the breaker 1 etc. according to the present invention can be widely applied to secondary battery packs, safety circuits for electrical devices, etc. FIG. 11 shows a secondary battery pack 500. The secondary battery pack 500 comprises a secondary battery 501 and the breaker 1 provided in an output circuit of the secondary battery 501.

FIG. 12 shows a safety circuit 502 for an electrical device. The safety circuit 502 includes the breaker 1 in series in an output circuit of a secondary battery 501.

According to the secondary battery pack 500 or the safety circuit 502 which includes the breaker 1, it is possible to realize the secondary battery pack 500 or the safety circuit 502 capable of providing stable conduction even when used at extremely low temperatures.

### Description of the Reference Signs

- 1:: Breaker
- 2:: Fixed piece
- 2a:: Bottom surface
- 4:: Movable piece
- 5:: Thermally-actuated element
- 6:: Thermistor
- 10:: Resin case
- 21:: Fixed contact
- 25:: Embedded portion
- 26:: Through-hole
- 41:: Movable contact
- 43:: Embedded portion
- 44:: Elastic portion
- 71:: Bottom portion
- 72:: Window portion
- 73:: Recess
- 74:: Outer peripheral portion
- 75:: First penetrating portion
- 76:: Island portion
- 76a:: Second penetrating portion
- 77:: Connecting portion
- 77a:: Rib
- 500:: Secondary battery pack
- 501:: Secondary battery
- 502:: Safety circuit
- 771:: First connecting portion
- 772:: Second connecting portion
- 773:: Third connecting portion
- 774:: Protruding portion

## Claims

1. A breaker (1) comprising:
a fixed piece (2) which has a fixed contact (21);
the breaker (1) further comprising a movable piece (4) which has an elastic portion (44) being elastically deformable, and a movable contact (41) in one end portion of the elastic portion (44), and which presses the movable contact (41) so as to contact with the fixed contact (21);
a thermally-actuated element (5) which is deformed in response to temperature changes so as to shift the movable piece (4)
from a conductive state in which the movable contact (41) contacts with the fixed contact (21)
to a cut-off state in which the movable contact (41) is separated from the fixed contact (21); and
a resin case (10) which has a recessed portion (73) for accommodating the thermally-actuated element (5),
wherein
the fixed piece (2) has an embedded portion (43) which is embedded in the resin case (10) in a region which, in a plan view viewed in the thickness direction of the fixed piece (2), overlaps with the thermally-actuated element (5), and
the resin case (10) has
an outer peripheral portion (74) which is formed on the outer perimeter of the recessed portion (73),
**characterized by** a
first penetrating portion (75) which penetrates the recessed portion (73) so as to exposes the embedded portion (43) to the thermally-actuated element (5) side, and
an island portion (76) which is, in the inside of the first penetrating portion (75), interposed between the fixed piece (2) and the thermally-actuated element (5), and
a connecting portion (77) which connects between the outer peripheral portion (74) and the island portion (76).

2. The breaker (1) as set forth in claim 1, wherein
the connecting portion (77) comprises a rib (77a) protruding toward the thermally-actuated element (5).

3. The breaker (1) as set forth in claim 1 or 2, wherein
the fixed piece (2) has a through-hole (26), and
the outer peripheral portion (74) and the connecting portion (77) are connected by resin filled in the through-hole (26).

4. The breaker (1) as set forth in any one of claims 1 to 3, wherein the resin case (10) has a bottom portion (71) covering the bottom surface of the fixed piece (2), and a window portion (72) penetrating the bottom portion (71) to expose the bottom surface.

5. The breaker (1) as set forth in any one of claims 1 to 4, which further comprises a positive characteristic thermistor (6), and
the island portion (76) is provided with a second penetrating portion (76a) for mounting the positive characteristic thermistor (6) so that the fixed piece (2) and the thermally-actuated element (5) are electrically connected through the positive characteristic thermistor (6).

6. The breaker (1) as set forth in claim 5, wherein the connecting portion (77) includes
first connecting portions (771) extending from the island portion (76) to both sides in a longer direction of the movable piece (4), and
second connecting portions (772) extending from the island portion (76) to both sides in a shorter direction of the movable piece (4).

7. The breaker (1) as set forth in any one of claims 1 to 4, wherein the connecting portion (77) includes a third connecting portion (773) extending in the longer direction of the movable piece (4) from the island portion (76) toward a side opposite to the fixed contact (21).

8. The breaker (1) as set forth in claim 7, wherein the resin case (10) comprises protruding portions (774) protruding from the island portion (76) to both sides in the shorter direction of the movable piece (4).

9. The breaker (1) as set forth in claim 8, wherein the protruding portions (774) terminate before the outer peripheral portion (74).

10. The breaker as set forth in claim 4, wherein the first penetrating portion (75) and the window portion (72) partially overlap in the plan view.

11. The breaker (1) as set forth in any one of claims 1 to 10, wherein
the thermally-actuated element (5) is formed in a rectangular shape in the plan view, and
the first penetrating portion (75) is provided at positions opposed to the four corners of the thermally-actuated element (5).

12. A safety circuit (502) for an electrical device, comprising the breaker (1) as set forth in any one of claims 1 to 11.

13. A secondary battery pack (500) comprising the breaker (1) as set forth in any one of claims 1 to 11.

## Patentansprüche

1. Schutzschalter (1), umfassend:
ein festes Teil (2), das einen festen Kontakt (21) aufweist;
wobei der Schutzschalter (1) ferner umfasst
ein bewegliches Teil (4), das einen elastischen Abschnitt (44) aufweist, der elastisch verformbar ist, und einen beweglichen Kontakt (41) an einem Endabschnitt des elastischen Abschnitts (44) aufweist, und das den beweglichen Kontakt (41) drückt, um mit dem festen Kontakt (21) in Kontakt zu kommen;
ein thermisch betätigtes Element (5), das sich als Reaktion auf Temperaturänderungen verformt, um das bewegliche Teil (4)
von einem leitenden Zustand, in dem der bewegliche Kontakt (41) mit dem festen Kontakt (21) in Kontakt steht,
in einen Unterbrechungszustand zu verschieben, in dem der bewegliche Kontakt (41) vom festen Kontakt (21) getrennt ist; und
ein Harzgehäuse (10), das einen Vertiefungsabschnitt (73) zur Aufnahme des thermisch betätigten Elements (5) aufweist,
wobei
das feste Teil (2) einen eingebetteten Abschnitt (43) aufweist, der in dem Harzgehäuse (10) in einem Bereich eingebettet ist, der in einer in der Dickenrichtung des festen Teils (2) betrachteten Draufsicht das thermisch betätigte Element (5) überlappt, und
das Harzgehäuse (10)
einen Außenumfangsabschnitt (74) aufweist, der am Außenumfang des Vertiefungsabschnitts (73) gebildet ist,
**gekennzeichnet durch**
einen ersten Durchdringungsabschnitt (75), der den Vertiefungsabschnitt (73) durchdringt, um den eingebetteten Abschnitt (43) zur Seite des thermisch betätigten Elements (5) freizulegen, und
einen Inselabschnitt (76), der im Inneren des ersten Durchdringungsabschnitts (75) zwischen dem festen Teil (2) und dem thermisch betätigten Element (5) angeordnet ist, und
einen Verbindungsabschnitt (77), der den Außenumfangsabschnitt (74) und den Inselabschnitt (76) miteinander verbindet.

2. Schutzschalter (1) nach Anspruch 1, wobei
der Verbindungsabschnitt (77) eine Rippe (77a) umfasst, die in Richtung des thermisch betätigten Elements (5) vorsteht.

3. Schutzschalter (1) nach Anspruch 1 oder 2, wobei
das feste Teil (2) ein Durchgangsloch (26) aufweist und der Außenumfangsabschnitt (74) und der Verbindungsabschnitt (77) durch in das Durchgangsloch (26) eingefülltes Harz verbunden sind.

4. Schutzschalter (1) nach einem der Ansprüche 1 bis 3, wobei
das Harzgehäuse (10) einen Bodenabschnitt (71), der die Bodenfläche des festen Teils (2) abdeckt, und einen Fensterabschnitt (72) aufweist, der den Bodenabschnitt (71) durchdringt, um die Bodenfläche freizulegen.

5. Schutzschalter (1) nach einem der Ansprüche 1 bis 4, der ferner einen Thermistor mit positiver Kennlinie (6) umfasst, und
der Inselabschnitt (76) mit einem zweiten Durchdringungsabschnitt (76a) zum Anbringen des Thermistors mit positiver Kennlinie (6) versehen ist, so dass das feste Teil (2) und das thermisch betätigte Element (5) über den Thermistor mit positiver Kennlinie (6) elektrisch verbunden sind.

6. Schutzschalter (1) nach Anspruch 5, wobei
der Verbindungsabschnitt (77) umfasst:
erste Verbindungsabschnitte (771), die sich vom Inselabschnitt (76) zu beiden Seiten in einer längeren Richtung des beweglichen Teils (4) erstrecken, und
zweite Verbindungsabschnitte (772), die sich vom Inselabschnitt (76) zu beiden Seiten in einer kürzeren Richtung des beweglichen Teils (4) erstrecken.

7. Schutzschalter (1) nach einem der Ansprüche 1 bis 4, wobei
der Verbindungsabschnitt (77) einen dritten Verbindungsabschnitt (773) enthält, der sich in der Längsrichtung des beweglichen Teils (4) vom Inselabschnitt (76) zu einer dem festen Kontakt (21) entgegengesetzten Seite erstreckt.

8. Schutzschalter (1) nach Anspruch 7, wobei
das Harzgehäuse (10) vorstehende Abschnitte (774) umfasst, die vom Inselabschnitt (76) zu beiden Seiten in der kürzeren Richtung des beweglichen Teils (4) vorstehen.

9. Schutzschalter (1) nach Anspruch 8, wobei
die vorstehenden Abschnitte (774) vor dem Außenumfangsabschnitt (74) enden.

10. Schutzschalter nach Anspruch 4, wobei
der erste Durchdringungsabschnitt (75) und der Fensterabschnitt (72) in der Draufsicht teilweise überlappen.

11. Schutzschalter (1) nach einem der Ansprüche 1 bis 10, wobei
das thermisch betätigte Element (5) in der Draufsicht in einer rechteckigen Form ausgebildet ist, und
der erste Durchdringungsabschnitt (75) an Positionen vorgesehen ist, die den vier Ecken des thermisch betätigten Elements (5) gegenüberliegen.

12. Sicherheitsschaltung (502) für eine elektrische Vorrichtung, umfassend den Schutzschalter (1) nach einem der Ansprüche 1 bis 11.

13. Sekundärbatteriepack (500), umfassend den Schutzschalter (1) nach einem der Ansprüche 1 bis 11.

## Revendications

1. Coupe-circuit (1) comprenant :
une pièce fixe (2) qui présente un contact fixe (21) ;
le coupe-circuit (1) comprenant en outre
une pièce mobile (4) qui présente une partie élastique (44) étant déformable élastiquement, et un contact mobile (41) dans une partie d'extrémité de la partie élastique (44), et qui presse le contact mobile (41) de manière à entrer en contact avec le contact fixe (21) ;
un élément actionné thermiquement (5) qui est déformé en réponse à des variations de température de manière à déplacer la pièce mobile (4)
depuis un état conducteur dans lequel le contact mobile (41) est en contact avec le contact fixe (21)
vers un état de coupure dans lequel le contact mobile (41) est séparé du contact fixe (21) ; et
un boîtier en résine (10) qui présente une partie en retrait (73) destinée à loger l'élément actionné thermiquement (5),
dans lequel
la pièce fixe (2) présente une partie noyée (43) qui est noyée dans le boîtier en résine (10) dans une région qui, dans une vue en plan observée dans la direction de l'épaisseur de la pièce fixe (2), chevauche l' élément actionné thermiquement (5), et
le boîtier en résine (10) présente
une partie périphérique extérieure (74) qui est formée sur le périmètre extérieur de la partie en retrait (73),
**caractérisé par** une première partie pénétrante (75) qui pénètre dans la partie en retrait (73) de manière à exposer la partie noyée (43) du côté de l'élément actionné thermiquement (5), et
une partie en îlot (76) qui est, à l'intérieur de la première partie pénétrante (75), interposée entre la pièce fixe (2) et l' élément actionné thermiquement (5), et
une partie de liaison (77) qui relie la partie périphérique extérieure (74) et la partie en îlot (76).

2. Coupe-circuit (1) selon la revendication 1, dans lequel
la partie de liaison (77) comprend une nervure (77a) faisant saillie en direction de l'élément actionné thermiquement (5).

3. Coupe-circuit (1) selon la revendication 1 ou 2, dans lequel
la pièce fixe (2) présente un trou traversant (26), et la partie périphérique extérieure (74) et la partie de liaison (77) sont reliées par de la résine remplissant le trou traversant (26).

4. Coupe-circuit (1) selon l'une quelconque des revendications 1 à 3, dans lequel
le boîtier en résine (10) présente une partie de fond (71) couvrant la surface inférieure de la pièce fixe (2), et une partie fenêtre (72) pénétrant la partie de fond (71) de manière à exposer la surface inférieure.

5. Coupe-circuit (1) selon l'une quelconque des revendications 1 à 4, qui comprend en outre une thermistance à coefficient de température positif (6), et
la partie en îlot (76) est pourvue d'une seconde partie pénétrante (76a) destinée au montage de la thermistance à coefficient de température positif (6), de sorte que la pièce fixe (2) et l'élément actionné thermiquement (5) sont connectés électriquement par l'intermédiaire de la thermistance à coefficient de température positif (6).

6. Coupe-circuit (1) selon la revendication 5, dans lequel
la partie de liaison (77) comporte
des premières parties de liaison (771) s'étendant depuis la partie en îlot (76) vers les deux côtés dans la direction longue de la pièce mobile (4), et
des secondes parties de liaison (772) s'étendant depuis la partie en îlot (76) vers les deux côtés dans la direction courte de la pièce mobile (4).

7. Coupe-circuit (1) selon l'une quelconque des revendications 1 à 4, dans lequel
la partie de liaison (77) comporte une troisième partie de liaison (773) s'étendant dans la direction longue de la pièce mobile (4) depuis la partie en îlot (76) vers un côté opposé au contact fixe (21).

8. Coupe-circuit (1) selon la revendication 7, dans lequel
le boîtier en résine (10) comprend des parties saillantes (774) faisant saillie depuis la partie en îlot (76) vers les deux côtés dans la direction courte de la pièce mobile (4).

9. Coupe-circuit (1) selon la revendication 8, dans lequel
les parties saillantes (774) se terminent avant la partie périphérique extérieure (74).

10. Coupe-circuit selon la revendication 4, dans lequel
la première partie pénétrante (75) et la partie fenêtre (72) se chevauchent partiellement dans la vue en plan.

11. Coupe-circuit (1) selon l'une quelconque des revendications 1 à 10, dans lequel
l'élément actionné thermiquement (5) est formé selon une forme rectangulaire dans la vue en plan, et
la première partie pénétrante (75) est prévue à des positions opposées aux quatre coins de l'élément actionné thermiquement (5).

12. Circuit de sécurité (502) pour un dispositif électrique, comprenant le coupe-circuit (1) selon l'une quelconque des revendications 1 à 11.

13. Bloc-batterie secondaire (500) comprenant le coupe-circuit (1) selon l'une quelconque des revendications 1 à 11.
